(19) Europäisches Patentamt
European Patent Office
Office européen des brevets

(11) **EP 3 125 216 A1**

(12) **EUROPEAN PATENT APPLICATION**

(43) Date of publication:
01.02.2017 Bulletin 2017/05

(51) Int Cl.:
*G09B 23/28* (2006.01)     *G09B 23/30* (2006.01)

(21) Application number: 16181418.1

(22) Date of filing: 27.07.2016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 30.07.2015 JP 2015150630

(71) Applicant: Seiko Epson Corporation
Tokyo 160-8801 (JP)

(72) Inventors:
• **Sekino, Hirokazu**
**Nagano, 3392-8502 (JP)**
• **Ito, Jiro**
**Nagano, 3392-8502 (JP)**
• **Seto, Takeshi**
**Nagano, 3392-8502 (JP)**

(74) Representative: **Hoffmann Eitle**
**Patent- und Rechtsanwälte PartmbB**
**Arabellastraße 30**
**81925 München (DE)**

(54) **SIMULATED ORGAN**

(57)    A simulated organ includes a simulated blood vessel that simulates a blood vessel of a human body, and a simulated parenchyma that simulates a parenchyma cell of the human body, and in which the simulated blood vessel is embedded. The simulated parenchyma has pressing pin breaking strength per unit area of 0.01 MPa to 0.07 MPa. In addition, the simulated blood vessel has tensile breaking strength of 0.3 MPa to 1.5 MPa.

FIG. 2

**Description**

BACKGROUND

1. Technical Field

The present invention relates to a simulated organ.

2. Related Art

In recent years, a simulated organ of a human body has been normally used in operation practice for improving operation skills. A proposal for this simulated organ has been reviewed in which each hardness relationship is defined after stacking a simulated muscle layer of a human body muscle, a simulated parenchyma layer of tissues overlying the muscle, and a simulated skin layer of the skin so as to simulate a human body part surrounding blood vessels in the human body (for example, refer to JP-A-2012-203153).

Without being limited to injection needle puncturing from a simulated skin layer side to a simulated blood vessel in a simulated organ, an operation technique includes incision or excision performed in a simulated blood vessel periphery by using a water jet scalpel. In this operation practice, when the incision or the excision is performed on a simulated parenchyma of the simulated blood vessel periphery by using a pulse jet from the water jet scalpel, it is desirable to recognize whether the simulated blood vessel may be damaged or it is desirable that practice for incising and excising the simulated parenchyma can be performed without causing any damage to the simulated blood vessel. In addition, when the incision or the excision is performed in the simulated blood vessel periphery, in some cases, a force to extend the blood vessel may be forcibly applied to the simulated blood vessel due to operation procedure content. However, although the simulated organ disclosed in JP-A-2012-203153 is suitable for practice for puncturing the blood vessel, the operation practice in the simulated blood vessel periphery is not taken into consideration as a matter of fact.

SUMMARY

An advantage of some aspects of the invention is to provide a simulated organ which is suitable for operation practice on the assumption that incision or excision is performed on a simulated parenchyma in a simulated blood vessel periphery.

The invention can be implemented as the following forms.

(1) An aspect of the invention provides a simulated organ. The simulated organ includes a simulated blood vessel that simulates a blood vessel of a human body, and a simulated parenchyma that simulates a parenchyma cell of the human body. The simulated blood vessel is embedded in the simulated parenchyma. The simulated parenchyma has pressing pin breaking strength per unit area of 0.01 MPa to 0.07 MPa. The simulated blood vessel has tensile breaking strength per unit area of 0.3 MPa to 1.5 MPa. In the simulated organ according to the aspect, even if a force is applied to the simulated parenchyma in a simulated blood vessel periphery so that the simulated parenchyma can be broken and the force to extend simulated blood vessel is applied to the simulated blood vessel, the simulated blood vessel is not damaged. In addition, the pressing pin breaking strength per unit area of 0.01 MPa to 0. 07 MPa is substantially the same degree as that of a cerebral parenchyma cell of the human body. Therefore, according to the simulated organ according to this aspect, an operation status can be provided on the assumption that incision or excision is performed on the simulated parenchyma in the simulated blood vessel periphery, in a state where a relationship of the pressing pin breaking strength with regard to the cerebral parenchyma cell of the human body is reflected.

(2) In the aspect, the simulated parenchyma may further have a pressing pin elastic modulus per unit area of 0.1 kPa to 6 kPa, and the simulated blood vessel may further have a tensile elastic modulus per unit area of 0.5 MPa to 1.5 MPa. The pressing pin elastic modulus per unit area of 0.1 kPa to 6 kPa is substantially the same degree as that of the cerebral parenchyma cell of the human body. Therefore, according to the simulated organ according to the aspect with this configuration, an operation status can be provided on the assumption that incision or excision is performed on the simulated parenchyma in the simulated blood vessel periphery, in a state where a relationship of the pressing pin elastic modulus with regard to the cerebral parenchyma cell of the human body is reflected.

(3) In the aspect, the simulated parenchyma may further have a loss elastic modulus of 150 Pa to 800 Pa, and the simulated blood vessel may further have a tensile breaking distortion rate of 1.0 to 3.0. The loss elastic modulus of 150 Pa to 800 Pa is substantially the same degree as that of the cerebral parenchyma cell of the human body. Therefore, according to the simulated organ according to the aspect with this configuration, an operation status can be provided on the assumption that incision or excision is performed on the simulated parenchyma in the simulated blood vessel periphery, in a state where a relationship of the loss elastic modulus with regard to the cerebral parenchyma cell of the human body is reflected.

(4) In the aspect, the simulated parenchyma may further have the pressing pin breaking strength per unit area of 0.015 MPa to 0.03 MPa, the pressing pin elastic modulus per unit area of 0.6 kPa to 5 kPa, and the loss elastic modulus of 250 Pa to 400 Pa. According to the simulated organ according to the aspect with this configuration, an operation status can be provided on the assumption that incision or excision is performed on the simulated parenchyma in the simulated blood vessel periphery, in a state where the pressing pin breaking strength, the pressing pin elastic modulus, and the loss elastic modulus per unit area of the simulated parenchyma are much further reflected by simulating the cerebral parenchyma cell of the human body.

(5) Another aspect of the invention provides a simulated organ. The simulated organ includes a simulated blood vessel that simulates a blood vessel of a human body, and a simulated parenchyma that simulates a parenchyma cell of the human body. The simulated blood vessel is embedded in the simulated parenchyma. The simulated parenchyma has pressing pin breaking strength per unit area of 0.01 MPa to 0.07 MPa. According to the simulated organ according to this aspect, an operation status can be provided on the assumption that incision or excision is performed on the simulated parenchyma having the simulated blood vessel embedded therein, in a state where the pressing pin breaking strength per unit area with regard to the cerebral parenchyma cell of the human body is reflected.

(6) Still another aspect of the invention provides a simulated organ. The simulated organ includes a simulated blood vessel that simulates a blood vessel of a human body, and a simulated parenchyma that simulates a parenchyma cell of the human body. The simulated blood vessel is embedded in the simulated parenchyma. The simulated blood vessel has tensile breaking strength per unit area of 0.3 MPa to 1.5 MPa. According to the simulated organ according to this aspect, an operation status can be provided on the assumption that incision or excision is performed on the simulated parenchyma in the simulated blood vessel periphery, in a state where damage to the simulated blood vessel is inhibited even if a force to extend the simulated blood vessel is applied to the simulated blood vessel.

The invention can be implemented in various forms in addition to the above-described configurations. For example, the invention can be implemented as a manufacturing method of the simulated organ.

BRIEF DESCRIPTION OF THE DRAWINGS

The invention will be described with reference to the accompanying drawings, wherein like numbers reference like elements.

Fig. 1 is a view for schematically describing a configuration of a liquid ejecting apparatus.

Fig. 2 is a top view of a simulated organ.
Fig. 3 is a sectional view taken along line 3-3 in Fig. 2.
Fig. 4 is a view for describing a test for pressing pin breaking strength.
Fig. 5 is a view illustrating test data obtained by the above-described strength test.
Fig. 6 is a view schematically illustrating a measurement state of a loss elastic modulus.
Fig. 7 is a view for describing a tension test for obtaining a physical property such as tensile breaking strength.
Fig. 8 is a view illustrating test data obtained by a tension test.
Fig. 9 is a flowchart illustrating a manufacturing procedure of the simulated organ.
Fig. 10 is a top view for describing a state where a first flexible member has been inserted into a first member.
Fig. 11 is a sectional view taken along line 11-11 illustrated in Fig. 10.
Fig. 12 is a top view for describing a state where a first simulated blood vessel, a second simulated blood vessel, and a third simulated blood vessel have been arranged.
Fig. 13 is a view for describing a sectional view taken along line 13-13 in Fig. 12 together with an assembly state of a second member.
Fig. 14 is a top view for describing a state where a second flexible member has been inserted.
Fig. 15 is a sectional view taken along line 15-15 in Fig. 14.
Fig. 16 is a top view for describing a state where a simulated parenchyma has been arranged.
Fig. 17 is a sectional view taken along line 17-17 in Fig. 16.
Fig. 18 is a top view for describing an excision portion.
Fig. 19 is a sectional view taken along line 19-19 in Fig. 18.

DESCRIPTION OF EXEMPLARY EMBODIMENTS

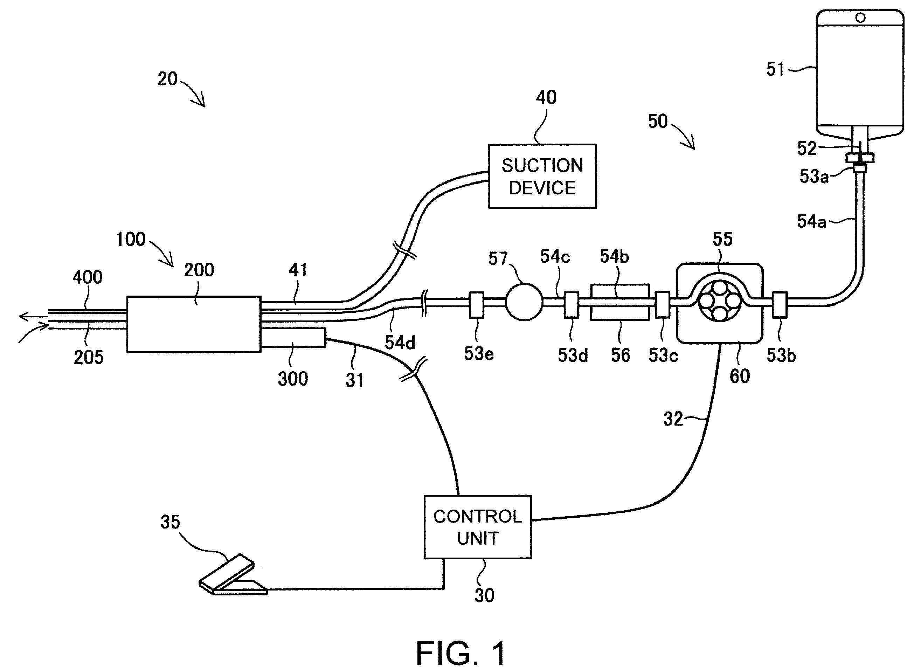

Fig. 1 is a view for schematically describing a configuration of a liquid ejecting apparatus 20. The liquid ejecting apparatus 20 is a medical device used in medical institutions, and has a function to incise and excise a lesion by ejecting a liquid to the lesion in a pulse-like manner.

The liquid ejecting apparatus 20 includes a control unit 30, an actuator cable 31, a pump cable 32, a foot switch 35, a suction device 40, a suction tube 41, a liquid supply device 50, and a handpiece 100.

The liquid supply device 50 includes a water supply bag 51, a spike needle 52, first to fifth connectors 53a to 53e, first to fourth water supply tubes 54a to 54d, a pump tube 55, a clogging detection mechanism 56, and a filter 57. The handpiece 100 includes a nozzle unit 200 and an actuator unit 300. The nozzle unit 200 includes an ejecting tube 205 and a suction pipe 400.

The water supply bag 51 is made of a transparent synthetic resin, and the inside thereof is filled with a liquid (specifically, a physiological saline solution). In the present application, even if a bag is filled with liquids other than the water, the bag is called the water supply bag 51. The spike needle 52 is connected to the first water supply tube 54a via the first connector 53a. If the spike needle 52 is stuck into the water supply bag 51, the liquid filling the water supply bag 51 is in a state where the liquid can be supplied to the first water supply tube 54a.

The first water supply tube 54a is connected to the pump tube 55 via the second connector 53b. The pump tube 55 is connected to the second water supply tube 54b via the third connector 53c. The tube pump 60 pinches the pump tube 55. The tube pump 60 feeds the liquid inside the pump tube 55 to the second water supply tube 54b side from the first water supply tube 54a side.

The clogging detection mechanism 56 detects clogging inside the first to fourth water supply tubes 54a to 54d by measuring pressure inside the second water supply tube 54b.

The second water supply tube 54b is connected to the third water supply tube 54c via the fourth connector 53d. The filter 57 is connected to the third water supply tube 54c. The filter 57 collects foreign substances contained in the liquid.

The third water supply tube 54c is connected to the fourth water supply tube 54d via the fifth connector 53e. The fourth water supply tube 54d is connected to the nozzle unit 200. The liquid supplied through the fourth water supply tube 54d is intermittently ejected from a distal end of the ejecting tube 205 by driving the actuator unit 300. The liquid is intermittently ejected in this way. Accordingly, it is possible to ensure excision capability using a small flow rate.

The ejecting tube 205 and the suction pipe 400 configure a double tube in which the ejecting tube 205 serves as an inner tube and the suction pipe 400 serves as an outer tube. The suction tube 41 is connected to the nozzle unit 200. The suction device 40 performs suction on the inside of the suction pipe 400 through the suction tube 41. The suction is performed on the liquid or excised fragments in the vicinity of the distal end of the suction pipe 400.

The control unit 30 controls the tube pump 60 and the actuator unit 300. Specifically, while the foot switch 35 is stepped on, the control unit 30 transmits a drive signal via the actuator cable 31 and the pump cable 32. The drive signal transmitted via the actuator cable 31 drives a piezoelectric element (not illustrated) included in the actuator unit 300. The drive signal transmitted via the pump cable 32 drives the tube pump 60. Accordingly, while a user steps on the foot switch 35, the liquid is intermittently ejected. While the user does not step on the foot switch 35, the liquid ejection is stopped.

Hereinafter, a simulated organ will be described. The simulated organ is also called a phantom, and is an artificial product whose portion is excised by the liquid ejecting apparatus 20 in the present embodiment. The simulated organ according to the embodiment is used in performing a simulated operation for the purpose of a performance evaluation of the liquid ejecting apparatus 20, a manipulation practice of the liquid ejecting apparatus 20, and the like.

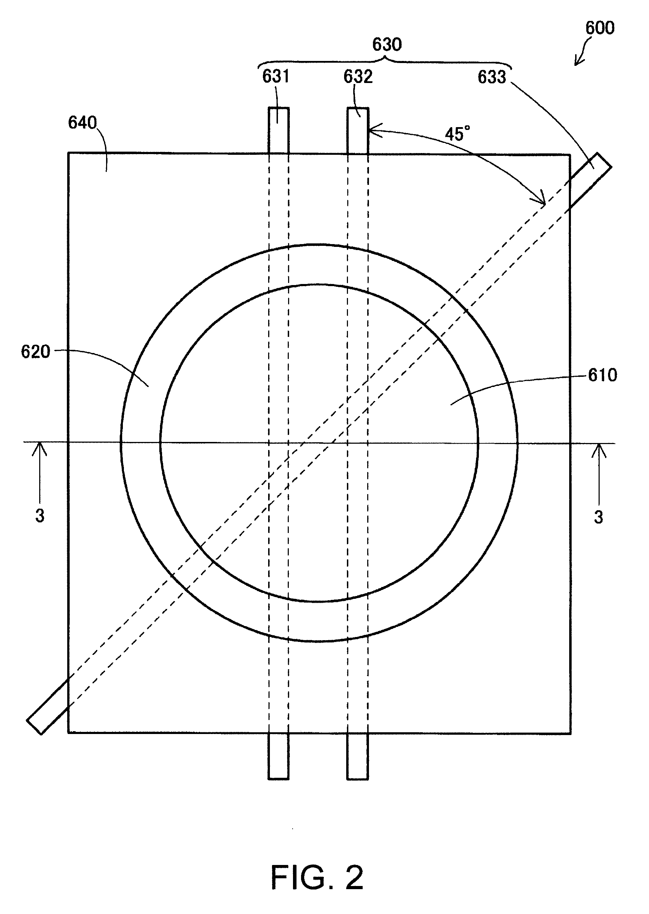

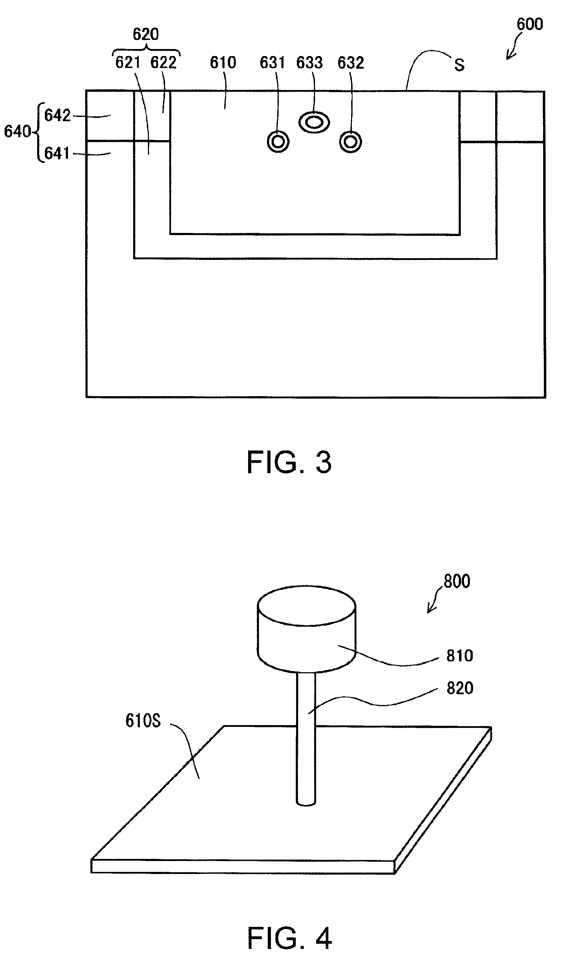

Fig. 2 is a top view of a simulated organ 600. Fig. 3 is a sectional view taken along line 3-3 illustrated in Fig. 2. The simulated organ 600 includes a simulated parenchyma 610, a flexible member 620, a first simulated blood vessel 631, a second simulated blood vessel 632, a third simulated blood vessel 633, and a case 640. In some cases, the first simulated blood vessel 631, the second simulated blood vessel 632, and the third simulated blood vessel 633 may be collectively referred to as a simulated blood vessel 630.

The case 640 includes a first member 641 and a second member 642. The second member 642 is fixed onto the first member 641, thereby configuring the case 640. The reason that the case 640 is configured to have two members in this way is to facilitate manufacturing of the simulated organ 600 (details will be described later).

The first member 641 and the second member 642 are manufactured by using a material having sufficient rigidity for supporting the flexible member 620 and the simulated blood vessel 630 (iron, aluminum, a hard resin, or the like). In order to have the above-described sufficient rigidity, the first member 641 and the second member 642 are formed of a material having a sufficiently higher elastic modulus compared to the flexible member 620.

The case 640 according to the embodiment is manufactured by using a transparent resin material. Since the case 640 is transparent, the flexible member 620 is visible from a side surface of the case 640. In the drawing according to the application, all members are opaquely illustrated.

The flexible member 620 is arranged inside a cylindrical recess formed in a central portion of the case 640. The flexible member 620 is formed in such a way that a first flexible member 621 and a second flexible member 622 are stacked on each other. The flexible member 620 is internally recessed so that the simulated parenchyma 610 can be held therein, and has a circular cup shape. The flexible member 620 is formed of a material which is softer than that of the case 640 and harder than that of the simulated parenchyma 610. The flexible member 620 according to the embodiment is formed of a material whose pressing pin breaking strength is five times and whose elastic modulus is also five times compared to those of the simulated parenchyma 610.

The simulated parenchyma 610 is an artificial product which simulates a parenchyma (parenchyma cell) which is a cell having an original physiological function of a human body organ (for example, a human brain, liver, or the like). According to the embodiment, the simulated parenchyma 610 simulates a cerebral parenchyma cell of a human body, and is arranged in the cylindrical recess formed in the central portion of the flexible member 620. The simulated parenchyma 610 is a target portion of incision and excision using the liquid ejecting apparatus 20.

The simulated blood vessel 630 is an artificial product which simulates a cerebral blood vessel of the human body. The simulated blood vessel 630 is held by the case 640, and is embedded in the simulated parenchyma 610 after penetrating the simulated parenchyma 610, the flexible member 620, and the case 640. Three in total, the first simulated blood vessel 631, the second simulated blood vessel 632, and the third simulated blood vessel 633 are arranged substantially horizontal.

The first simulated blood vessel 631 and the second simulated blood vessel 632 are arranged so as to respectively have an intersection point with respect to the third simulated blood vessel 633. The first simulated blood vessel 631 and the second simulated blood vessel 632 are arranged parallel to each other, and have no intersection point. The intersection point described herein means a portion where the first simulated blood vessel 631 and the second simulated blood vessel 632 respectively intersect the third simulated blood vessel 633 in a case where the simulated blood vessel 630 is projected on a surface S (Fig. 3). The surface S comes into contact with an upper end of the case 640 and comes into contact with a surface on which the simulated parenchyma 610 is exposed from the case 640.

According to the embodiment, the first to third simulated blood vessels are arranged so that three are not parallel to each other. The first simulated blood vessel 631 and the second simulated blood vessel 632 are arranged parallel to each other. The third simulated blood vessel 633 is arranged so that an angle on a horizontal plane becomes 45° with respect to the first simulated blood vessel 631 and the second simulated blood vessel 632. The third simulated blood vessel 633 crosses the first simulated blood vessel 631 and the second simulated blood vessel 632 in an overhead crossing manner. At the crossing point, the third simulated blood vessel 633 is located over the first simulated blood vessel 631 and the second simulated blood vessel 632 (refer to Fig. 3).

Hereinafter, physical properties of the simulated parenchyma 610 and the simulated blood vessel 630 will be described. The simulated organ 600 according to the embodiment is manufactured on the assumption of a simulated operation for a human brain. It is known that pig cerebral tissues, specifically, a pig cerebral blood vessel and a pig cerebral parenchyma having the cerebral blood vessel embedded therein, have substantially the same degree of strength as those of the human body. Accordingly, pressing pin breaking strength per unit area (hereinafter, simply referred to as pressing pin breaking strength), a pressing pin elastic modulus per unit area (hereinafter, simply referred to as a pressing pin elastic modulus), and a loss elastic modulus, all of which belong to the pig cerebral parenchyma, are obtained from the simulated parenchyma 610. In addition, with regard to the simulated blood vessel 630, tensile breaking strength, a tensile elastic modulus, and a tensile breaking distortion rate, all of which belong to the pig cerebral blood vessel, are obtained from the simulated blood vessel 630. This point will be described, based on the above-described physical properties in the simulated parenchyma 610.

It has been found that the pig cerebral parenchyma has the pressing pin breaking strength of 0.02 MPa to 0.06 MPa, the pressing pin elastic modulus of 0.5 kPa to 5 kPa, and the loss elastic modulus of 200 Pa to 600 Pa. These physical property values are obtained from actual measurement results of the pig cerebral parenchyma in various physical property value measurement devices (to be described later) or various research results. Then, the strength of the simulated parenchyma 610 can be changed by changing a manufacturing condition of polyvinyl alcohol (PVA). For this reason, according to the embodiment, the strength is adjusted so that the above-described physical property values of the pig cerebral parenchyma are reflected, by changing the manufacturing condition of the PVA when the simulated parenchyma 610 is manufactured.

Fig. 4 is a view for describing a test for the pressing pin breaking strength. A simulated parenchyma test sample 610S illustrated in the drawing is a test sample of the simulated parenchyma 610, which is formed in order to adjust the strength of the PVA under the same condition as the manufacturing condition of the simulated parenchyma 610. A strength measuring machine 800 (manufactured by Shimadzu Corporation: Table-top Material Tester EZ-S) presses a pin 820 against the test sample by using a load cell 810. The thickness of the test sample is adjusted in accordance with a measurement condition in the strength measuring machine 800 illustrated in Fig. 4.

The simulated parenchyma test sample 610S is subjected to the strength test after being placed on a test table (not illustrated) of the above-described strength measuring machine 800. The strength measuring machine 800 applies a pressing force of the load cell 810 via the pin 820 to the simulated parenchyma test sample 610S subjected to the strength test. In the strength test, the pin 820 is pressed and deformed until the simulated parenchyma test sample 610S starts to be broken. The pressing force of the pin 820 during this deformation process is measured from the load cell 810 on a real time basis. The pin 820 used in measuring pressing pin breaking strength of the simulated parenchyma test sample 610S which is the test sample of the simulated parenchyma 610 has a pin diameter of 1.0 mm, and is pressed into the test sample at pressing speed of 1 mm/s.

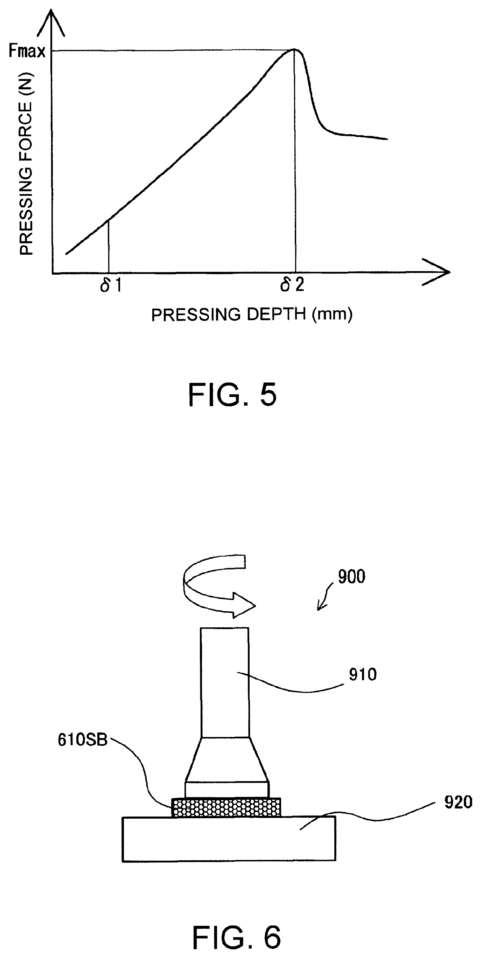

Fig. 5 is a view illustrating test data obtained by the above-described strength test. The vertical axis represents the pressing force of the pin 820, and the horizontal axis represents a pressing depth obtained by the pin 820. The pin 820 is pressed at the speed of 1 mm/s.

Accordingly, as illustrated in Fig. 5, the pressing depth increases with the lapse of time, and the pressing force increases so as to be substantially linear with respect to the pressing depth. The physical property values of the simulated parenchyma 610 are obtained from a graph in Fig. 5 in the following manner.

As illustrated in Fig. 5, until the pressing depth reaches a depth $\delta 2$, the pressing force also increases due to an increase in the pressing depth. The pressing pin elastic modulus (MPa) of the simulated parenchyma test sample 610S is calculated as a portion of a linear region, based on a data gradient in a region whose pressing depth reaches a depth $\delta 1$ ($<\delta 2$). The calculation employs Equation (1) below. Equation (1) is a Hertz Sneddon equation.

$$F=2R\left\{E/\left(1-v^{2}\right)\right\}\delta \quad (1)$$

In Equation (1), F represents the pressing force, R represents a radius of a pin tip of the pin 820, E represents an elastic modulus, $v$ represents a Poisson's ratio, and $\delta$ represents the pressing depth. It is preferable to set the depth $\delta 1$ to a great value having such a degree that the value can approximate if the data is linear. On the other hand, the Hertz Sneddon equation is effective in a case where the depth $\delta$ is sufficiently smaller than the radius R (= 0.5 mm). Accordingly, it is preferable to set the depth $\delta 1$ so as to be sufficiently smaller than the radius R. If Equation (1) is modified, Equation (2) is obtained as follows.

$$E=\left\{\left(1-v^{2}\right)/2R\right\}\left(F/\delta\right) \quad (2)$$

In Equation (2), $F/\delta$ represents the data gradient. The Poisson's ratio $v$ can employ 0.49 as an estimate value, based on the fact that the simulated parenchyma test sample 610S is substantially incompressible. The radius R is known as described above. Accordingly, it is possible to calculate a pressing pin elastic modulus E of the simulated parenchyma test sample 610S by measuring the data gradient.

As illustrated in Fig. 5, the pressing force peaks out at a certain pressing depth. The reason that the pressing force peaks out is considered due to the fact that the simulated parenchyma test sample 610S is broken. The pressing force when the pressing force peaks out is set to the maximum pressing force Fmax, and the pressing depth at the time of the maximum pressing force Fmax is set to the depth 82. The pressing pin breaking strength P (MPa) is calculated by Equation (3) below. The radius R in this equation is known as described above.

$$P=Fmax/\left(\pi R^{2}\right) \quad (3)$$

Various adjustments of the PVA for manufacturing the simulated parenchyma 610 are defined by manufacturing the simulated parenchyma test sample 610S in which the strength of the PVA is completely adjusted and by repeatedly performing the above-described test, so as to obtain the pressing pin breaking strength (0.02 MPa to 0.06 MPa), the pressing pin breaking strength (0.01 MPa to 0.07 MPa) including the pressing pin elastic modulus (0.5 kPa to 5 kPa), the pressing pin elastic modulus (0.1 kPa to 6 kPa), and the loss elastic modulus (to be described below), all of which belong to the pig cerebral parenchyma. The defined various adjustments of the PVA are performed in a manufacturing process (to be described later) . Then, the simulated parenchyma 610 manufactured through the defined various adjustments of the PVA is a product in which the physical property values of the pig cerebral parenchyma are reflected with regard to the pressing pin breaking strength and the pressing pin elastic modulus. In this case, the strength of the PVA is adjusted, thereby enabling the pressing pin breaking strength of the simulated parenchyma 610 to become 0.015 MPa to 0.03 MPa, or enabling the pressing pin elastic modulus to become 0.6 kPa to 5 kPa.

According to the embodiment, with regard to the simulated parenchyma 610, in addition to the pressing pin breaking strength and the pressing pin elastic modulus which are described above, the loss elastic modulus is also defined as follows. The loss elastic modulus is a physical property value of a viscoelastic body which is observed when a sinusoidal oscillation distortion is given to the viscoelastic body, and can be measured with regard to the pig cerebral parenchyma which is the viscoelastic body. Fig. 6 is a view schematically illustrating a measurement state of the loss elastic modulus. A dynamic viscoelasticity measuring device 900 illustrated in the drawing (manufactured by TA Instruments: DHR-2) causes a parallel plate 910 to pinch a sample placed on a sample table 920 provided with a slip function, and gives the sinusoidal oscillation distortion to the sample in the parallel plate 910, thereby measuring the loss elastic modulus, based on distortion appearing in the sample. In the drawing, a cylindrical simulated parenchyma test sample 610SB is illustrated as the sample. The simulated parenchyma test sample 610SB is used as a substitution for measuring the loss elastic modulus of the simulated parenchyma 610. In order to define the loss elastic modulus of the simulated parenchyma 610, the loss elastic modulus of the pig cerebral parenchyma is first measured by using the dynamic viscoelasticity measuring device 900 illustrated in Fig. 6. In the measurement, the pig cerebral parenchyma having the same size as that of the simulated parenchyma test sample 610SB illustrated in the drawing is prepared, and the loss elastic modulus is measured in the cerebral parenchyma. The loss elastic modulus is measured with regard to a plurality of cerebral parenchyma cells of a different portion or the cerebral parenchyma of a different solid. As a result, it can be confirmed that the pig cerebral parenchyma has the loss elastic modulus of 200 Pa to 600 Pa.

According to the embodiment, conditions for various adjustments of the PVA are defined so that a loss elastic modulus (G") of the simulated parenchyma test sample 610SB becomes 150 Pa to 800 Pa including the elastic modulus of the pig cerebral parenchyma, and under the defined adjustment conditions of the PVA, the simulated parenchyma 610 is manufactured in a manufacturing process (to be described later), thereby manufacturing the simulated parenchyma 610 including the loss elastic modulus (G") of 150 Pa to 800 Pa as the simulated organ 600. In this case, the loss elastic modulus (G") of the simulated parenchyma 610 can be set to 250 Pa to 400 Pa by adjusting the strength of the PVA. A measurement condition of the loss elastic modulus in the dynamic viscoelasticity measuring device 900, HR-2 manufactured by TA instruments, is as follows.

Size of Parallel Plate 910: φ20 mm
Sinusoidal Frequency: 1 Hz
Sinusoidal Oscillation Distortion: 1%
Temperature for Test: 20°C
Sample Size (diameter x thickness) : φ 25 x 5 (mm)

Next, physical property values of the simulated blood vessel 630 will be described. The simulated organ 600 according to the embodiment is manufactured on the assumption that a force to extend the blood vessel can be applied to the simulated blood vessel 630. Accordingly, as the physical property values relating to the extension of the pig cerebral blood vessel, tensile breaking strength per unit area (hereinafter, simply referred to as tensile breaking strength), a tensile elastic modulus per unit area (hereinafter, simply referred to as a tensile elastic modulus), and a tensile breaking distortion rate are assumed. It has been found that the pig cerebral blood vessel has the tensile breaking strength of 0.5 MPa to 1.2 MPa, the tensile elastic modulus of 0.7 MPa to 1.2 MPa, and the tensile breaking distortion rate of 1.2 to 2.7. These physical property values are obtained from a result in which an actual tensile property of the pig cerebral blood vessel is measured by using the strength measuring machine 800 in Fig. 4 in order to measure the tensile strength, or from various research results. Then, the simulated blood vessel 630 is manufactured by using the polyvinyl alcohol (PVA). As is known, the strength of the PVA can be changed by changing the manufacturing condition. For this reason, according to the embodiment, the manufacturing condition of the PVA when the simulated blood vessel 630 is manufactured is defined so that the above-described physical property values of the pig cerebral blood vessel are reflected.

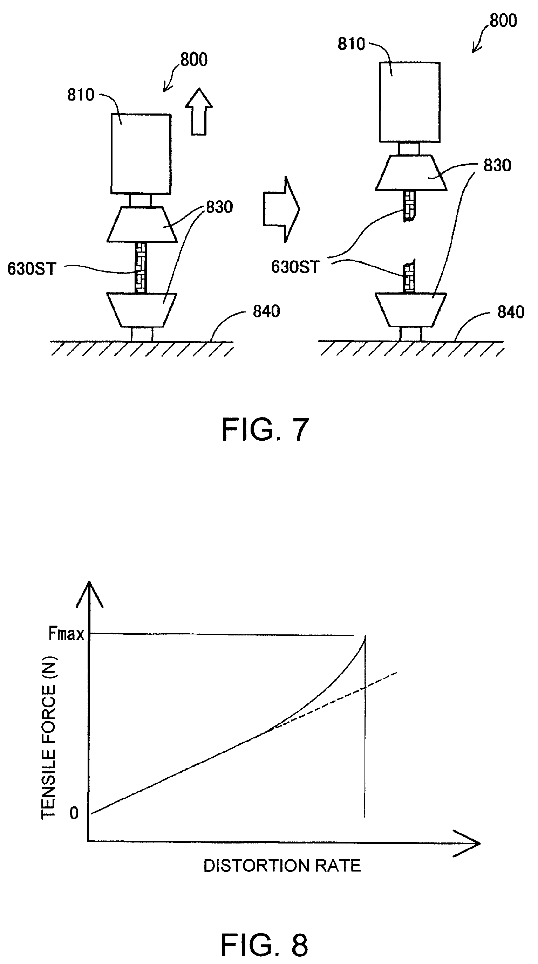

Fig. 7 is a view for describing a tension test for obtaining a physical property such as tensile breaking strength. A simulated blood vessel sample 630ST illustrated in the drawing is a test sample of the simulated blood vessel 630 manufactured in a hollow blood vessel shape under the same manufacturing condition as that of the simulated blood vessel 630. The simulated blood vessel 630 itself may be the simulated blood vessel sample 630ST. In the tension test, the previously described strength measuring machine 800 (manufactured by Shimadzu Corporation: Table-top Material Tester EZ-S) can be used. Accordingly, as illustrated in the drawing, sample gripping jigs 830 are respectively mounted on the load cell 810 and the table 840, and the sample gripping jigs 830 use both ends so as to grip the simulated blood vessel sample 630ST. After the simulated blood vessel sample 630ST is gripped by using a defined measurement length in this way, the tension test starts. The simulated blood vessel sample 630ST may be manufactured in a tape shape having a rectangular cross section.

The strength measuring machine 800 lifts the load cell 810 at constant speed so as to apply tensile strength (hereinafter, referred to as a tensile force) to the simulated blood vessel sample 630ST subjected to the tension test, and pulls the simulated blood vessel sample 630ST until the simulated blood vessel sample 630ST is broken. The simulated blood vessel sample 630ST extends with the lapse of time in the tension test, and is finally broken. The strength measuring machine 800 measures the tensile force generated during this tension process from the load cell 810 on a real time basis. According to the embodiment, the tension test was performed at tensile speed of 1 mm/sec.

Fig. 8 illustrates test data obtained by the tension test. The vertical axis represents the tensile force obtained every unit time, and the horizontal axis represents a distortion rate obtained in such a way that the length of the simulated blood vessel sample 630ST for every elapsed test time is divided by an initial test distance between the sample gripping jigs. The simulated blood vessel sample 630ST is pulled at the speed of 1 mm/sec. Accordingly, the horizontal axis in Fig. 8 corresponds to the elapsed time. Then, as illustrated in Fig. 8, the tensile force increases with the lapse of time, in other words, as the distortion rate increases. The tensile force increases so as to be substantially linear with respect to the distortion rate within an initial period when the test starts. The physical property values of the simulated blood vessel sample 630ST are obtained from the graph in Fig. 8 as follows.

As illustrated in Fig. 8, the tensile force increases so as to be substantially linear with respect to the distortion rate after the test starts. Thereafter, the increasing tensile force inflects when reaching a peak, and the tensile force rapidly peaks out from the peak to zero. The tensile force peaks out since the simulated blood vessel sample 630ST is broken. Accordingly, the maximum tensile force Fmax and the distortion rate when the tensile force peaks out are obtained as the tensile breaking strength and the tensile breaking distortion rate. The tensile breaking strength is obtained in such a way that the maximum tensile force Fmax is divided by a vascular theory cross-sectional area belonging to the simulated blood vessel sample 630ST. Then, the tensile breaking distortion rate is obtained by using a ratio of a stroke (extension: mm) until the peak-out to the defined length (mm) of the simulated blood vessel sample 630ST when the tension test starts. In addition, the tensile elastic modulus is calculated, based on a gradient of the tensile force in a linear region of tensile force transition at the initial starting time of the tension test in Fig. 8.

Various adjustments of the PVA for manufacturing the simulated blood vessel 630 are defined by manufacturing the simulated blood vessel sample 630ST using the PVA and by repeatedly performing the above-described tension test, so as to obtain the tensile breaking strength (0.5 MPa to 1.2 MPa) belonging to the pig cerebral blood vessel, the tensile breaking strength (0.3 MPa to 1.5 MPa) including the tensile elastic modulus (0.7 MPa to 1.2 MPa) and the tensile breaking distortion rate (1.2 to 2.5), the tensile elastic modulus (0.5 MPa to 1.5 MPa), and the tensile breaking distortion rate (1.0 to 3.0). The defined various adjustments of the PVA are performed in a manufacturing process (to be described later). Then, the simulated blood vessel 630 manufactured through the defined various adjustments of the PVA is a product in which the physical property values of the pig cerebral blood vessel are reflected with regard to the tensile breaking strength, the tensile elastic modulus, and the tensile breaking distortion rate. In this case, the strength of the PVA is adjusted in various ways, thereby enabling the tensile breaking strength to become 0.7 MPa to 1.0 MPa, enabling the tensile elastic modulus to become 0.8 MPa to 1.0 MPa, or enabling the tensile breaking distortion rate to become 1.4 to 2.0 so that the above-described physical property values of the simulated blood vessel 630 further approximate the pig cerebral blood vessel.

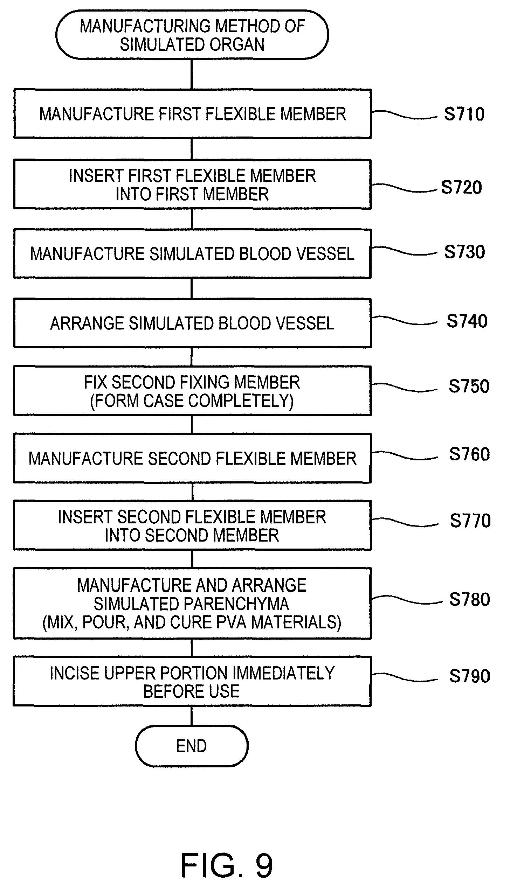

Fig. 9 is a flowchart illustrating a manufacturing procedure of the simulated organ 600. The first flexible member 621 is first manufactured (Step S710). Specifically, a mixture obtained by mixing and stirring a main agent of urethane and a curing agent is poured into a separately prepared die (not illustrated). Thereafter, the urethane is gelled into elastomeric gel, thereby forming the first flexible member 621. According to this die molding, it is possible to obtain the first flexible member 621 whose upper end is open in a recessed shape.

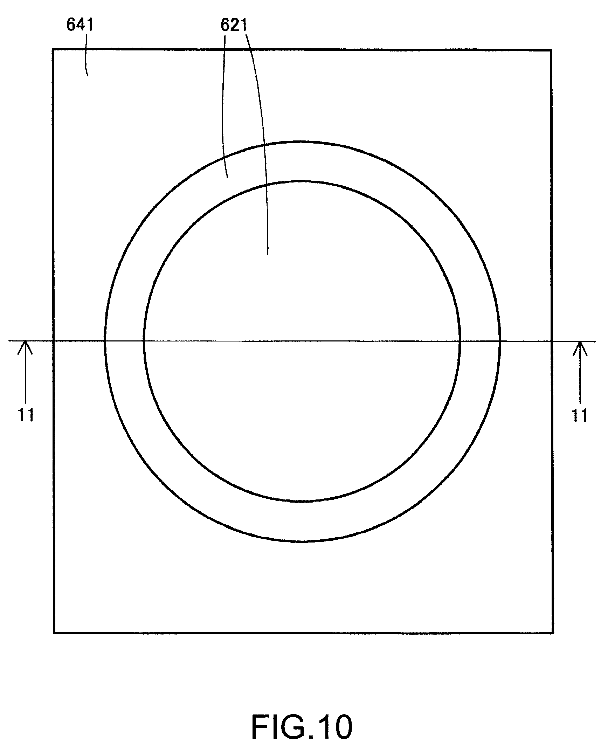

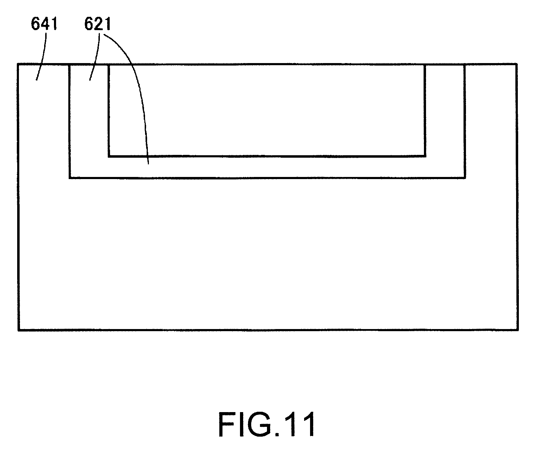

Next, the first flexible member 621 is inserted into the recess of the first member 641 (Step S720). Fig. 10 is a top view for describing a state where the first flexible member 621 has been inserted into the first member 641. Fig. 11 is a sectional view taken along line 11-11 illustrated in Fig. 10.

Next, the simulated blood vessel 630 is manufactured (Step S730). As a material for the simulated blood vessel 630, the embodiment employs polyvinyl alcohol (PVA). In a case of the embodiment, the simulated blood vessel 630 is a hollow member, and thus, the following manufacturing method can be employed. According to the method, an outer periphery of an extra fine wire is coated with the PVA prior to curing, and the extra fine wire is pulled out after the PVA is cured. The outer diameter of the extra fine wire is aligned with the inner diameter of the blood vessel. The extra fine wire is made of metal, and is formed of a piano wire, for example. In manufacturing the simulated blood vessel 630 by using the PVA, as described previously, the manufacturing conditions of the PVA are adjusted so as to obtain the tensile breaking strength of 0.3 MPa to 1.5 MPa, the tensile elastic modulus of 0.5 MPa to 1.5 MPa, and the tensile breaking distortion rate of 1.0 to 3.0. The simulated blood vessel 630 is formed by using the PVA whose manufacturing conditions have been adjusted and the extra fine wire such as the piano wire. In a case where the first simulated blood vessel 631, the second simulated blood vessel 632, and the third simulated blood vessel 633 are set to be different simulated blood vessels, the diameter of the extra fine wire to be used may be changed.

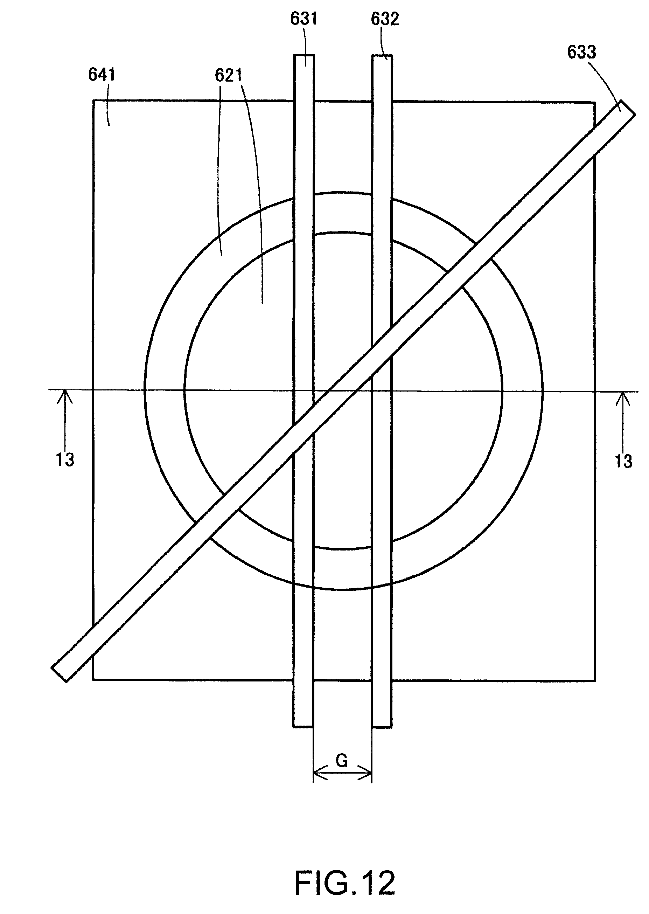

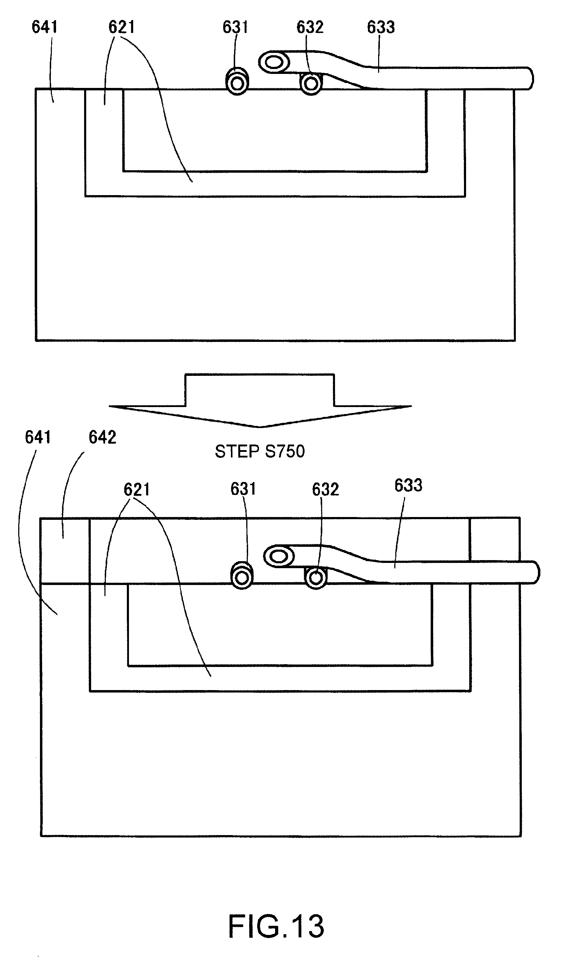

Next, the simulated blood vessel 630 is arranged (Step S740). Fig. 12 is a top view for describing a state where the first simulated blood vessel 631, the second simulated blood vessel 632, and the third simulated blood vessel 633 have been arranged. Fig. 13 is a view for describing a sectional view taken along line 13-13 in Fig. 12 together with an assembly state of the second member 642. As illustrated in Figs. 12 and 13, when the blood vessels are arranged in Step S740, the first simulated blood vessel 631 and the second simulated blood vessel 632 are arranged at a predetermined position, and thereafter, the third simulated blood vessel 633 is arranged at a predetermined position.

A gap G between the first simulated blood vessel 631 and the second simulated blood vessel 632 is set to a distance larger than the diameter of the suction pipe 400 (refer to Fig. 1). This enables the suction pipe 400 to be inserted between the first simulated blood vessel 631 and the second simulated blood vessel 632 when incision and excision are performed on the simulated parenchyma 610. However, even if the gap G is too wide, the presence of the simulated blood vessel 630 in the vicinity of an excision target is less affected. Accordingly, the gap G is set to approximately several times the diameter of the suction pipe 400.

Next, the second member 642 is fixed to the first member 641 (Step S750). Specifically, as illustrated in a lower section in Fig. 13, the second member 642 having a rectangular frame shape is placed on the first member 641. The simulated blood vessel 630 is pinched by the first member 641 and the second member 642. In this state, the second member 642 is fixed to the first member 641 by using a screw (not illustrated). In this manner, the case 640 is completed, and an upper region of the first flexible member 621 is surrounded with the second member 642.

Next, the second flexible member 622 is manufactured (Step S760). The manufacturing method is the same as the manufacturing method (Step S710) of the first flexible member 621. However, the second flexible member 622 has a shape different from that of the first flexible member 621, and has a ring shape. Accordingly, a die different from that in Step S710 is used.

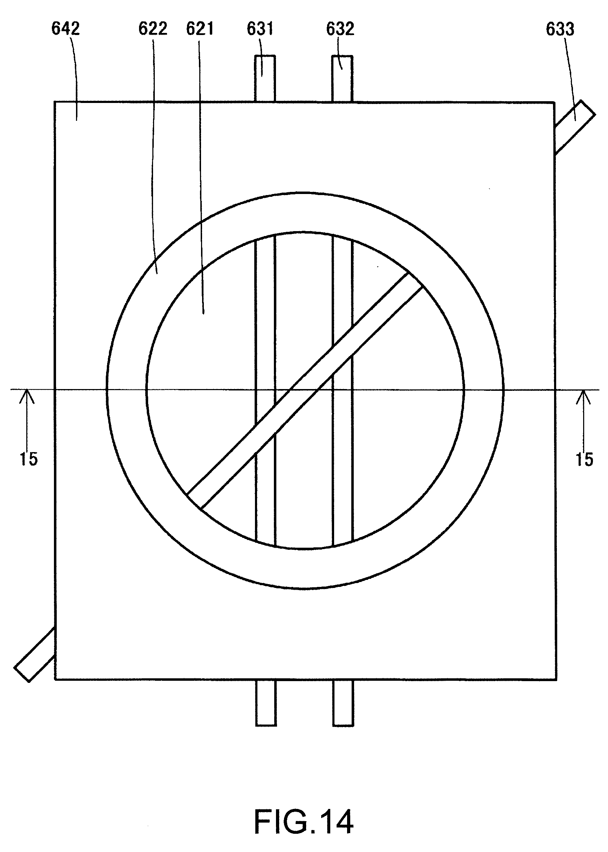

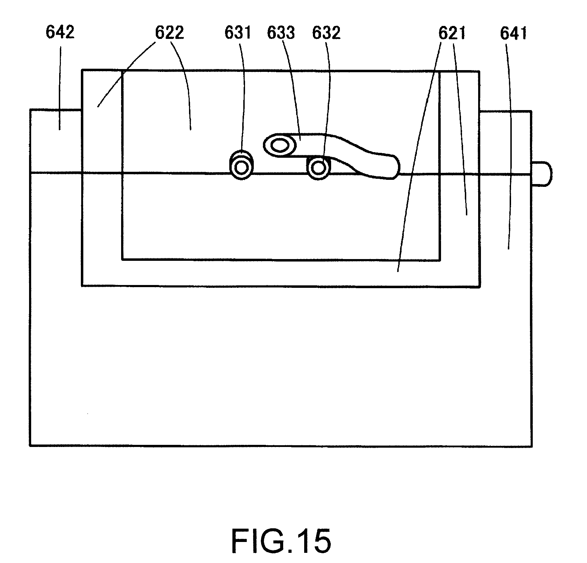

Next, the second flexible member 622 is inserted into a hole of the second member 642 (Step S770). Fig. 14 is a top view for describing a state where the second flexible member 622 has been inserted. Fig. 15 is a sectional view taken along line 15-15 in Fig. 14. Inserting the second flexible member in Step S770 causes the simulated blood vessel 630 to be pinched between the first flexible member 621 and the second flexible member 622 as illustrated in Figs. 14 and 15. As illustrated in Fig. 15, the second flexible member 622 further protrudes compared to the second member 642 in Step S770. That is, the second flexible member 622 is manufactured in a ring shape whose thickness is greater than the height of the second member 642 in Step S760.

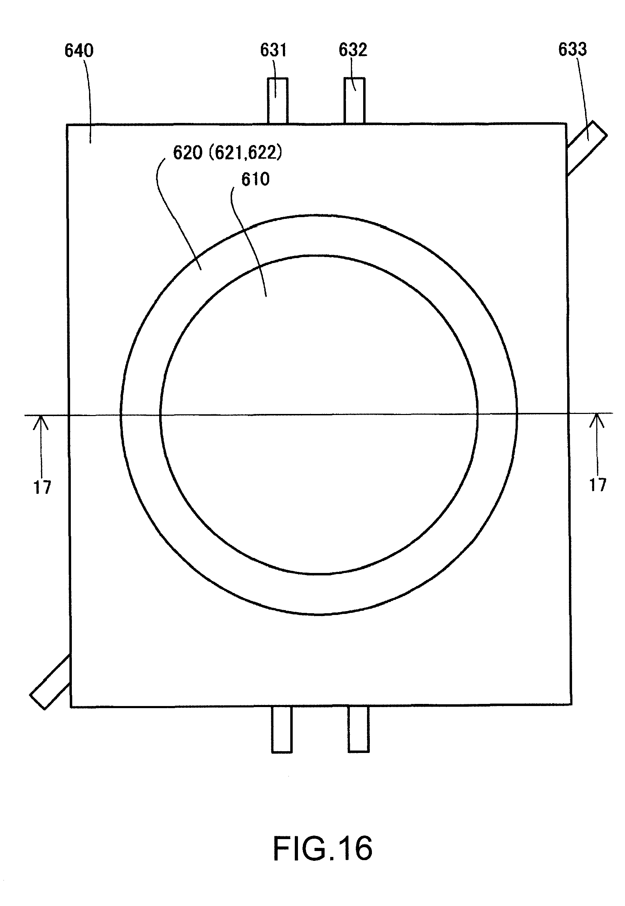

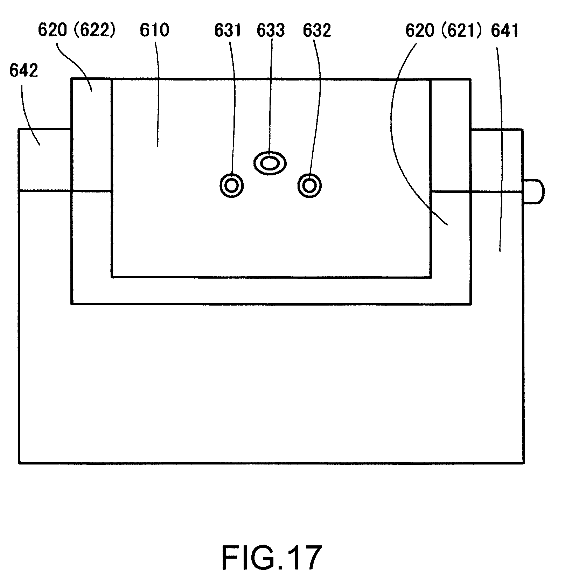

Next, the simulated parenchyma 610 is manufactured and arranged (Step S780). Fig. 16 is a top view for describing a state where the simulated parenchyma 610 has been arranged. Fig. 17 is a sectional view taken along line 17-17 in Fig. 16. When the simulated parenchyma 610 is manufactured in Step S780, the PVA is used. PVA materials are mixed and cured by freezing. When the simulated parenchyma 610 is arranged, the PVA materials are poured into a recess surrounded with the second flexible member 622. Then, in manufacturing the simulated parenchyma 610, the strength is adjusted by adjusting a mixing ratio of the PVA materials or by changing the manufacturing conditions, so as to obtain the pressing pin breaking strength of 0.01 MPa to 0.07 MPa, the pressing pin elastic modulus of 0.1 kPa to 6 kPa, and the loss elastic modulus of 150 Pa to 800 Pa. As described previously, in manufacturing the simulated parenchyma 610, various adjustments are performed so that the breaking strength and the elastic modulus are one fifth of those of the flexible member 620.

Immediately before the simulated organ 600 is used after Step S780 is completed, the simulated parenchyma 610 and an upper portion of the flexible member 620 are excised (Step S790). In this manner, the simulated organ 600 illustrated in Figs. 2 and 3 is completely obtained. In the simulated organ 600, the simulated blood vessel 630 whose pressing pin breaking strength is 0.2 MPa is embedded and included in the simulated parenchyma 610 whose pressing pin breaking strength is 0.01 MPa to 0.07 MPa. The simulated parenchyma 610 and the upper portion of the flexible member 620 correspond to a portion protruding from the upper surface of the case 640.

An excision test of the simulated parenchyma 610 is performed on the obtained simulated organ 600. This excision test is performed in order to evaluate performance of the liquid ejecting apparatus 20 illustrated in Fig. 1.

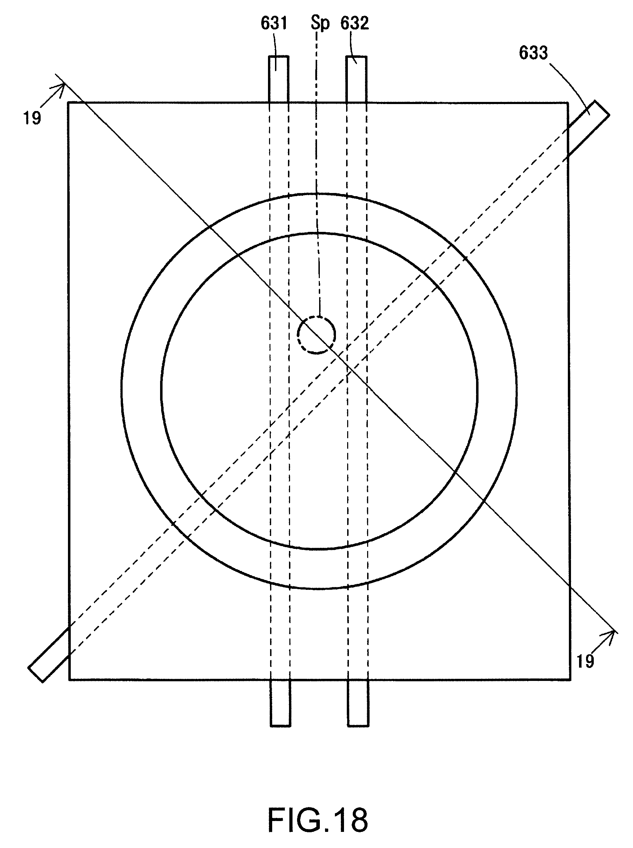

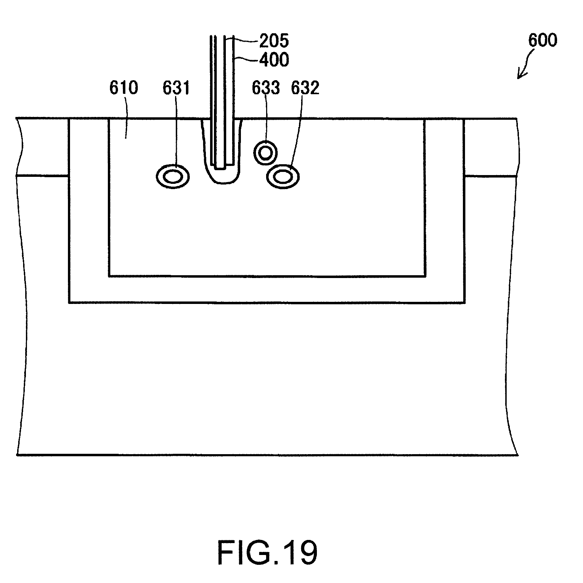

Fig. 18 is a top view for describing an excision portion Sp. Fig. 19 is a sectional view taken along line 19-19 in Fig. 18. The excision portion Sp is selected as a portion located in the vicinity of the intersection point between the first simulated blood vessel 631 and the third simulated blood vessel 633, and in the vicinity of the intersection point between the second simulated blood vessel 632 and the third simulated blood vessel 633. According to the liquid ejecting apparatus 20, a pulse jet of the liquid ejected from the ejecting tube 205 is adjusted so as to be suitable for incision and excision of the simulated parenchyma 610. It is confirmed that the pulse jet of the liquid intermittently ejected from the ejecting tube 205 after the pulse jet is adjusted enables an operator to perform incision and excision on the simulated parenchyma 610 in the illustrated excision portion Sp without any particular trouble.

In the simulated organ 600 according to the above-described embodiment, the pressing pin breaking strength of the simulated parenchyma 610 is set to 0.01 MPa to 0.07 MPa, and the tensile breaking strength of the simulated blood vessel 630 is set to 0.3 MPa to 1.5 MPa. Accordingly, in practicing incision and excision skills for the simulated parenchyma 610 illustrated in Fig. 19, even if a force to extend the simulated blood vessel 630 is applied from a portion of the incision and excision to the simulated blood vessel 630 due to the pulse jet of the liquid intermittently ejected from the ejecting tube 205, the simulated blood vessel 630 is not damaged. In addition, the pressing pin breaking strength of the above-described simulated parenchyma 610 is substantially the same degree as that of the cerebral parenchyma cell of the human body, and the tensile breaking strength of the simulated blood vessel 630 is also substantially the same degree as that of the cerebral blood vessel of the human body. As a result, according to the simulated organ 600 in the embodiment, an operation status can be provided on the assumption that incision or excision is performed on the simulated parenchyma 610 around the simulated blood vessel 630, in a state where a relationship of the pressing pin breaking strength with regard to the cerebral parenchyma cell of the human body and the tensile breaking strength with regard to the cerebral blood vessel is reflected.

According to the simulated organ 600 in the above-described embodiment, in addition to the pressing pin breaking strength of the simulated parenchyma 610 and the tensile breaking strength of the simulated blood vessel 630, the pressing pin elastic modulus of the simulated parenchyma 610 is set to 0.1 kPa to 6 kPa, and the tensile elastic modulus of the simulated blood vessel 630 is set to 0.5 MPa to 1.5 MPa. Therefore, according to the simulated organ 600, an operation status can be provided on the assumption that incision or excision is performed on the simulated parenchyma 610 around the simulated blood vessel 630, in a state where a relationship of the pressing pin elastic modulus with regard to the cerebral parenchyma cell of the human body and the tensile elastic modulus with regard to the cerebral blood vessel is reflected.

According to the simulated organ 600 in the above-described embodiment, in addition to the pressing pin breaking strength and the pressing pin elastic modulus of the simulated parenchyma 610 and the tensile breaking strength and tensile elastic modulus of the simulated blood vessel 630, the loss elastic modulus of the simulated parenchyma 610 is set to 150 Pa to 800 Pa, and the tensile breaking distortion rate of the simulated blood vessel 630 is set to 1.0 to 3.0. Therefore, according to the simulated organ 600, an operation status can be provided on the assumption that incision or excision is performed on the simulated parenchyma 610 around the simulated blood vessel 630, in a state where a relationship of the loss elastic modulus with regard to the cerebral parenchyma cell of the human body and the tensile breaking distortion rate with regard to the cerebral blood vessel is reflected.

Alternatively, according to the simulated organ 600 in the above-described embodiment, a urethane gelling status of urethane is adjusted when the simulated parenchyma 610 is manufactured. In this manner, the pressing pin breaking strength of the simulated parenchyma 610 can be set to 0.015 MPa to 0.03 MPa, the pressing pin elastic modulus can be set to 0.6 kPa to 5 kPa, and the loss elastic modulus can be set to 250 Pa to 400 Pa. Therefore, according to the simulated organ 600 in the embodiment in which the physical property values are adjusted in this manner, an operation status can be provided in a state where the pressing pin breaking strength, the pressing pin elastic modulus, and the loss elastic modulus of the simulated parenchyma 610 are much further reflected by simulating the cerebral parenchyma cell of the human body. As a result, an operator can have an improved sense of realism when performing a simulated operation.

Without being limited to the embodiment, the example, and the modification example which are described herein, the invention can be implemented according to various configurations within the scope not departing from the gist of the invention. For example, technical features in the embodiment, the example, and the modification example which correspond to technical features according to each aspect described in the summary of the invention can be appropriately replaced or combined with each other in order to partially or entirely solve the previously described problem or in order to partially or entirely achieve the previously described advantageous effects. If any one of the technical features is not described herein as essential, the technical feature can be appropriately omitted. For example, the following configurations can be adopted as an alternative.

According to the simulated organ 600, on the consumption of the cerebral parenchyma and the cerebral blood vessel, the simulated blood vessel 630 is embedded in the simulated parenchyma 610. However, an organ other than the brain can also be assumed. In this case, the pressing pin breaking strength with regard to the simulated parenchyma 610 and the tensile breaking strength with regard to the simulated blood vessel 630 may simulate the parenchyma cell and the blood vessel in the assumed organ. This assumption is similarly applied to the above-described physical property values other than the pressing pin breaking strength with regard to the simulated parenchyma 610 and the above-described physical property values other than the tensile breaking strength with regard to the simulated blood vessel 630.

The simulated organ 600 may be excised by using those which other than the intermittently ejected liquid. For example, the simulated organ 600 may be excised by using a continuously ejected liquid, or may be excised by using a liquid provided with excision capability using an ultrasound. Alternatively, the simulated organ 600 may be excised by using a metal scalpel.

The number of simulated blood vessels 630 may be one, two, four, or more. A configuration may be adopted in which at least one simulated blood vessel 630 is embedded in the simulated parenchyma 610.

In addition, the simulated blood vessel 630 is the hollow member, but may be a solid member.

The material of the simulated blood vessel 630 is not limited to that in the above-described example. For example, a synthetic resin other than the PVA (for example, urethane) may also be used, or a natural resin may also be used.

The material of the simulated parenchyma 610 is not limited to that in the above-described example. For example, a synthetic resin other than the PVA (for example, urethane or a rubber-based material) may also be used.

The simulated blood vessel 630 may be manufactured by using injection deposition (3D printing using an ink jet method).

The simulated parenchyma 610 may be manufactured by using the 3D printing.

The simulated blood vessel 630 and the simulated parenchyma 610 may be collectively manufactured by using the 3D printing. When the 3D printing is performed in this way, an ink may be adjusted in advance so that the above-described strength relationship between the simulated parenchyma 610 and the simulated blood vessel 630 is expressed after the ink is dried.

The embodiment adopts a configuration in which the piezoelectric element is used as the actuator. However, the embodiment may adopt a configuration in which the liquid is ejected by using an optical maser, a configuration in which the liquid is ejected by a heater generating air bubbles in the liquid, or a configuration in which the liquid is ejected by a pump pressurizing the liquid. According to the configuration in which the liquid is ejected by using the optical maser, the optical maser emits radiation to the liquid so as to generate the air bubbles in the liquid, and increased pressure of the liquid which is caused by generating the air bubbles is utilized.

The simulated organ 600 according to the above-described embodiment has the above-described physical property values such as the pressing pin breaking strength of the simulated parenchyma 610 and the above-described physical property values such as the tensile breaking strength of the simulated blood vessel 630, but the configuration is not limited thereto. For example, the simulated parenchyma 610 may have the pressing pin breaking strength of 0.01 MPa to 0.07 MPa. In this case, an operation status can also be provided on the assumption that incision or excision is performed on the simulated parenchyma 610 having the simulated blood vessel 630 embedded therein, in a state where the pressing pin breaking strength with regard to the cerebral parenchyma cell of the human body is reflected.

Alternatively, the simulated blood vessel 630 may have the tensile breaking strength of 0.3 MPa to 1.5 MPa. In this case, an operation status can also be provided on the assumption that incision or excision is performed on the simulated parenchyma 610 around the simulated blood vessel 630, in a state where damage to the simulated blood vessel 630 is inhibited even if a force to extend the simulated blood vessel 630 is applied to the simulated blood vessel 630.

According to the embodiment, the second member 642 is fixed onto the first member 641, thereby configuring the case 640, but the configuration is not limited thereto. Any configuration may be adopted in which the first member 641 and the second member 642 are not erroneously moved relative to each other. Alternatively, a configuration may also be adopted in which two members are connected to each other using friction force generated by two members coming into contact with each other, or a configuration may also be adopted in which the two members are attachable to and detachable from each other.

The embodiment adopts a configuration in which the simulated blood vessel 630 is embedded in the simulated parenchyma 610 by penetrating the simulated parenchyma 610, the flexible member 620, and the case 640, but the configuration is not limited thereto. A configuration may also be adopted in which the simulated blood vessel 630 penetrates at least one of the simulated parenchyma 610, the flexible member 620, and the case 640, or a configuration may also be adopted in which none of the members is penetrated. Any configuration may be adopted in which at least a portion of the simulated blood vessel 630 is embedded in the simulated parenchyma. In addition, the embodiment adopts a configuration in which the simulated blood vessel is fixed to the case 640, but the configuration is not limited thereto. A configuration may also be adopted in which the simulated blood vessel is less likely to move by coming into close contact with the simulated parenchyma without being fixed to the case 640.

## Claims

1. A simulated organ comprising:

   a simulated blood vessel that simulates a blood vessel of a human body; and
   a simulated parenchyma that simulates a parenchyma cell of the human body,

   wherein the simulated blood vessel is embedded in the simulated parenchyma, and
   wherein the simulated parenchyma has pressing pin breaking strength per unit area of 0.01 MPa to 0.07 MPa.

2. A simulated organ comprising:

   a simulated blood vessel that simulates a blood vessel of a human body; and
   a simulated parenchyma that simulates a parenchyma cell of the human body,

   wherein the simulated blood vessel is embedded in the simulated parenchyma, and
   wherein the simulated blood vessel has tensile breaking strength per unit area of 0.3 MPa to 1.5 MPa.

3. A simulated organ comprising:

   a simulated blood vessel that simulates a blood vessel of a human body; and
   a simulated parenchyma that simulates a parenchyma cell of the human body,

   wherein the simulated blood vessel is embedded in the simulated parenchyma,
   wherein the simulated parenchyma has pressing pin breaking strength per unit area of 0.01 MPa to 0.07 MPa, and
   wherein the simulated blood vessel has tensile breaking strength per unit area of 0.3 MPa to 1.5 MPa.

4. The simulated organ according to claim 3, wherein the simulated parenchyma further has a pressing pin elastic modulus per unit area of 0.1 kPa to 6 kPa, and
   wherein the simulated blood vessel further has a tensile elastic modulus per unit area of 0.5 MPa to 1.5 MPa.

5. The simulated organ according to claim 3, wherein the simulated parenchyma further has a loss elastic modulus of 150 Pa to 800 Pa, and
   wherein the simulated blood vessel further has a tensile breaking distortion rate of 1.0 to 3.0.

6. The simulated organ according to claim 5, wherein the simulated parenchyma further has the pressing pin breaking strength per unit area of 0.015 MPa to 0.03 MPa, the pressing pin elastic modulus per unit area of 0.6 kPa to 5 kPa, and the loss elastic modulus of 250 Pa to 400 Pa.

7. The simulated organ according to any of claims 1 to 6, wherein the simulated organ includes a flexible member and a case.

8. The simulated organ according to any of claims 1 to 7, wherein the simulated blood vessel includes a first simulated blood vessel, a second simulated blood vessel and a third simulated blood vessel.

9. The simulated organ according to claim 7 or 8, wherein the case includes a first member and a second member, wherein the second member is fixed onto the first member, thereby configuring the case.

10. The simulated organ according to claim 9, wherein the first member and the second member are formed of a material having a sufficiently higher elastic modulus compared to the flexible member and having a sufficient rigidity for supporting the flexible member and the simulated blood vessel.

11. The simulated organ according to any of claims 7 to 10, wherein the case is transparent and the flexible member is visible from a side surface of the case.

12. The simulated organ according to any of claims 7 to 11, wherein the flexible member is arranged inside a cylindrical recess formed in a central portion of the case.

13. The simulated organ according to any of claims 7 to 12, wherein the flexible member is internally recessed so that the simulated parenchyma can be held therein, and has a circular cup shape.

14. The simulated organ according to any of claims 7 to 13 , wherein the flexible member is formed of a material whose pressing pin breaking strength is five times and whose elastic modulus is five times compared to those of the simulated parenchyma.

15. The simulated organ according to any of claims 1 to 14, wherein the simulated parenchyma is manufactured using PVA materials, and wherein the strength is adjusted by adjusting a mixing ratio of the PVA materials of by changing the manufacturing conditions, so as to obtain the pressing pin breaking strength of 0.01 MPa to 0.07 MPA, the pressing pion elastic modulus of 0.1 kPa to 6 kPa, and the loss elastic modulus of 150 Pa to 800 Pa.

FIG. 1

EP 3 125 216 A1

FIG. 2

FIG. 3

FIG. 4

FIG. 5

FIG. 6

EP 3 125 216 A1

FIG. 7

FIG. 8

17

MANUFACTURING METHOD OF
SIMULATED ORGAN

MANUFACTURE FIRST FLEXIBLE MEMBER — S710

INSERT FIRST FLEXIBLE MEMBER
INTO FIRST MEMBER — S720

MANUFACTURE SIMULATED BLOOD VESSEL — S730

ARRANGE SIMULATED BLOOD VESSEL — S740

FIX SECOND FIXING MEMBER
(FORM CASE COMPLETELY) — S750

MANUFACTURE SECOND FLEXIBLE MEMBER — S760

INSERT SECOND FLEXIBLE MEMBER
INTO SECOND MEMBER — S770

MANUFACTURE AND ARRANGE
SIMULATED PARENCHYMA
(MIX, POUR, AND CURE PVA MATERIALS) — S780

INCISE UPPER PORTION IMMEDIATELY
BEFORE USE — S790

END

# FIG. 9

FIG.10

641　621

FIG.11

641   621   631   632   633

13   13

G

FIG.12

641    621        631    632    633

STEP S750

641    642

621        631    632    633

# FIG.13

FIG.14

642    622    631    633    632    621    641

FIG.15

FIG.16

FIG.17

FIG.18

FIG.19

Europäisches
Patentamt

European
Patent Office

Office européen
des brevets

# EUROPEAN SEARCH REPORT

Application Number

EP 16 18 1418

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 677 273 A1 (INST NAGOYA IND SCIENCE RES [JP]) 5 July 2006 (2006-07-05) * paragraphs [0029], [0030], [0033], [0034], [0041], [0072]; figures 2A,4,7 * | 1-15 | INV. G09B23/28 G09B23/30 |
| A | EP 2 410 502 A1 (UNIV WASEDA [JP]) 25 January 2012 (2012-01-25) * paragraphs [0022], [0023], [0025]; figure 1 * | 1 | |
| A | GB 2 328 775 A (MOUSSA SAMI AHMED [GB]) 3 March 1999 (1999-03-03) * claim 1; figures 1,4 * | 1 | |
| A | EP 2 287 823 A1 (ONO & CO LTD [JP]) 23 February 2011 (2011-02-23) * claim 1; figure 1 * | 1 | |

TECHNICAL FIELDS
SEARCHED      (IPC)

G09B

The present search report has been drawn up for all claims

| Place of search | Date of completion of the search | Examiner |
|---|---|---|
| Munich | 31 August 2016 | Beauce, Gaetan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 1418

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2016

| Patent document cited in search report | | Publication date | Patent family member(s) | | Publication date |
|---|---|---|---|---|---|
| EP 1677273 | A1 | 05-07-2006 | EP 1677273 A1 | | 05-07-2006 |
| | | | KR 20060085692 A | | 27-07-2006 |
| | | | US 2007148626 A1 | | 28-06-2007 |
| | | | WO 2005038751 A1 | | 28-04-2005 |
| EP 2410502 | A1 | 25-01-2012 | EP 2410502 A1 | | 25-01-2012 |
| | | | JP 4404963 B1 | | 27-01-2010 |
| | | | US 2012040323 A1 | | 16-02-2012 |
| | | | WO 2010106691 A1 | | 23-09-2010 |
| GB 2328775 | A | 03-03-1999 | NONE | | |
| EP 2287823 | A1 | 23-02-2011 | CN 102027525 A | | 20-04-2011 |
| | | | EP 2287823 A1 | | 23-02-2011 |
| | | | JP 5140857 B2 | | 13-02-2013 |
| | | | JP 2009273508 A | | 26-11-2009 |
| | | | KR 20110008254 A | | 26-01-2011 |
| | | | US 2011060446 A1 | | 10-03-2011 |
| | | | WO 2009139431 A1 | | 19-11-2009 |

EPO FORM P0459

For more details about this annex : see Official Journal of the European Patent Office, No. 12/82

**REFERENCES CITED IN THE DESCRIPTION**

**Patent documents cited in the description**

• JP 2012203153 A